# EUROPÄISCHE PATENTSCHRIFT

(11) **EP 2 483 154 B1**
(45) Veröffentlichungstag und Bekanntmachung des Hinweises auf die Patenterteilung: **07.11.2018**
(21) Anmeldenummer: 10766242.1
(22) Anmeldetag: 28.09.2010
(51) Int. Cl.: B64D 13/00, B64D 13/08, F25B 49/02, B64D 13/06

(54) **SYSTEM UND VERFAHREN ZUR KÜHLUNG UND/ODER BEHEIZUNG VON LUFTFAHRZEUGEINRICHTUNGEN**
SYSTEM AND METHOD FOR CONTROLLING AN AIRCRAFT COOLING SYSTEM
SYSTÈME ET PROCÉDÉ DE COMMANDE D'UN SYSTÈME DE REFROIDISSEMENT D'UN AVION

(30) Priorität: 29.09.2009 DE 102009043429; 29.09.2009 US 246662 P; 13.11.2009 DE 102009053094; 13.11.2009 US 261025 P
(43) Veröffentlichungstag der Anmeldung: 08.08.2012
(73) Patentinhaber: Airbus Operations GmbH, 21129 Hamburg (DE)
(72) Erfinder: HOELLING, Marc, 21073 Hamburg (DE); ROTHAMMER, Werner, 21244 Buchholz (DE); DITTMAR, Jan, 21614 Buxtehude (DE); COLBERG, Carsten, 21147 Hamburg (DE); CASAS NORIEGA, Wilson, Willy, 21147 Hamburg (DE); ULUC, Ozan, 22761 Hamburg (DE); ROERING, Sebastian, 20359 Hamburg (DE); WOLF, Holger, 27389 Lauenbrueck (DE)
(74) Vertreter: Schicker, Silvia
(86) Internationale Anmeldenummer: PCT/EP2010/005913
(87) Internationale Veröffentlichungsnummer: WO 2011/038889

(56) Entgegenhaltungen:
- EP-A2- 1 801 009
- EP-A2- 1 808 373
- WO-A1-2009/090026
- US-A1- 2005 061 012

## Beschreibung

Die Erfindung betrifft ein System und ein Verfahren zur Kühlung und/oder Beheizung von zu kühlenden und/oder zu beheizenden Luftfahrzeugeinrichtungen.

Moderne Luftfahrzeuge, insbesondere Verkehrsflugzeuge, umfassen eine Vielzahl von Komponenten und Systemen, die in Abhängigkeit ihrer Ausgestaltung, ihrer Funktion und ihres Betriebszustands sowie in Abhängigkeit der Umgebungsbedingungen gekühlt und/oder beheizt werden müssen. Einige an Bord des Luftfahrzeugs vorhandene Systeme, wie z.B. elektronische Einrichtungen müssen im Betrieb ausschließlich gekühlt werden, um eine ausreichende Abfuhr der von den Luftfahrzeugeinrichtungen erzeugten Wärmelasten und damit eine ordnungsgemäße Funktion der Luftfahrzeugeinrichtungen zu gewährleisten. Andere Systeme müssen dagegen insbesondere dann, wenn sich das Luftfahrzeug im Flugbetrieb befindet und Außentemperaturen von bis zu - 60° C vorherrschen, beheizt werden. Schließlich gibt es Systeme, die in bestimmten Betriebssituationen, beispielsweise im Bodenbetrieb des Luftfahrzeugs, gekühlt und in anderen Betriebssituationen, beispielsweise im Flugbetrieb des Luftfahrzeugs, beheizt werden müssen.

In derzeit eingesetzten Luftfahrzeugen werden die verschiedenen an Bord des Luftfahrzeugs vorhandenen zu kühlenden und/oder zu beheizenden Einrichtungen durch den zu kühlenden und/oder zu beheizenden Luftfahrzeugeinrichtungen zugeordnete Einzelkühl- und/oder -heizsysteme mit Kühl- und/oder Heizenergie versorgt. Die Einzelkühl- und/oder -heizsysteme sind hinsichtlich ihres Aufbaus und ihres Betriebs in der Regel speziell an die von den zu kühlenden und/oder zu beheizenden Luftfahrzeugeinrichtungen gestellten Kühl- und oder Heizbedarfsanforderungen angepasst. Um in allen Betriebssituationen des Luftfahrzeugs zuverlässig eine ordnungsgemäße Funktion der zu kühlenden und/oder zu beheizenden Luftfahrzeugeinrichtungen sicherstellen zu können, müssen die den zu kühlenden und/oder zu beheizenden Luftfahrzeugeinrichtungen zugeordneten Einzelkühl- und/oder -heizsysteme daher so dimensioniert und ausgelegt sein, dass sie auch in Spitzenlastzeiten, d.h. Zeiten maximalen Kühl- und/oder Heizbedarfs der zu kühlenden und/oder zu beheizenden Luftfahrzeugeinrichtungen, eine ausreichende Versorgung der zu kühlenden und/oder zu beheizenden Luftfahrzeugeinrichtungen mit Kühl- und/oder Heizenergie ermöglichen. Die Einzelkühl- und/oder -heizsysteme haben daher ein verhältnismäßig hohes Gewicht sowie einen verhältnismäßig hohen Einbauraumbedarf. Ferner ist der Betrieb der Einzelkühl- und/oder -heizsysteme insbesondere in Spitzenlastzeiten sehr energieintensiv.

Der Erfindung liegt die Aufgabe zugrunde, ein System und ein Verfahren zur Kühlung und/oder Beheizung von zu kühlenden und/oder zu beheizenden Luftfahrzeugeinrichtungen bereitzustellen, die eine leichtgewichtige und einbauraumsparende Dimensionierung und Auslegung von den zu kühlenden und/oder zu beheizenden Luftfahrzeugeinrichtungen zugeordneten Einzelkühl- und/oder -heizsystemen sowie einen energieeffizienten Betrieb dieser Einzelkühl- und/oder -heizsysteme ermöglichen.

Dokument US 2005/061012 A1 offenbart ein Bordküchenkühlsystem, wobei Komponenten des Bordküchenkühlsystems auch von anderen Kühlsystemen des Flugzeugs genutzt werden. Das System umfasst einen ersten und einen zweiten Verdampfer. Der erste Verdampfer ist im Bereich der Bordküche und der zweite Verdampfer in einer Luftleitung der Flugzeugklimaanlage vorgesehen. Entsprechend kann mit dem ersten Verdampfer die Bordküche gekühlt werden, während mit dem zweiten Verdampfer zusätzliche Kühlleistung für die Flugzeugklimaanlage bereitgestellt werden kann. Somit kann, nachdem die Bordküche auf eine bestimmte Temperatur herabgekühlt worden ist, die Kühlleistung des Bordküchenkühlsystems verwendet werden, um die Flugzeugklimaanlage zu unterstützen. Zudem können die Verflüssiger des Bordküchenkühlsystems derart angeordnet sein, dass diese ihre Abwärme nicht an die Flugzeugkabine, sondern z. B. an den Frachtbereich des Flugzeugs abgeben.

Dokument WO 2009/090026 A1 offenbart ein System zur individuellen Temperierung von Luftfahrzeugkabinenbereichen durch Heizen und Verdunstungskühlung. Dieses System umfasst eine zentrale Klimatisierungseinrichtung, die einen mit Druck beaufschlagten und temperierten Zentralluftstrom bereitstellt. Der Zentralluftstrom wird aufgeteilt und unterschiedlichen Kabinenbereichen zugeführt. Dabei können die einzelnen Luftströme durch Verdunstungskühler und Heizeinrichtungen geleitet werden. Der zentralen Klimatisierungseinrichtung kann rezirkulierte Luft und/oder Triebwerkszapfluft zugeführt werden.

Obwohl im Allgemeinen kalte Luft nur mit höheren Energieverlusten bereitgestellt werden kann als warme Luft, kann durch das Klimaanlagensystem des Dokuments WO 2009/090026 A1 die Luft ohne oder nahezu ohne Verlustleistung gekühlt werden. Da zudem der zum Erwärmen der Luft benötigte elektrische Strom während des Flugs relativ hohe Energieverluste verursachen kann, kann es gemäß Dokument WO 2009/090026 A1 sinnvoll sein, dass die von der zentralen Klimatisierungseinrichtung abgegebene Luft eine Temperatur aufweist, die der höchsten Soll-Temperatur der den Kabinenbereichen zuzuführenden Luftströme entspricht. Die den verbleibenden Kabinenbereichen zuzuführende Luft kann dann durch Verdunstungskühlung gekühlt werden. Eine Steuerungseinrichtung kann die zentrale Klimatisierungseinrichtung, die Kühleinrichtungen und die Heizeinrichtungen so steuern, dass der Gesamtenergieverbrauch des Klimatisierungssytems minimal ist. Der Gesamtenergieverbrauch umfasst dabei die Energieverluste, die bei der Bereitstellung der warmen Luft oder beim Erwärmen von Luft entstehen.

Dokument EP 1 801 009 A2 offenbart ein integriertes Steuersystem für eine Bordküchenkühleinheit und eine Kabinenklimaanlage. Die Steuerung bestimmt, ob das Kühlen der Bordküche Vorrang vor dem Kühlen der Passagierkabine hat. Entsprechend werden Wärmetauscher der Bordküche und/oder ein Umluftwärmetauscher, der zusätzlich gekühlte Luft für die Passagierkabine bereitstellt, mit einer gekühlten Flüssigkeit versorgt. Ein Ventil dient dazu, den Umluftwärmetauscher mit dem Kühlkreis der Bordküchenkühleinheit zu verbinden. Das Ventil wird nur dann geöffnet, wenn das Kühlen der Passagierkabine Vorrang vor dem Kühlen der Bordküchen hat. In der Steuerung ist ein Steueralgorithmus implementiert, mit dem das Ventil und somit der Betrieb des Umluftwärmetauschers gesteuert wird. Der Steueralgorithmus wertet dazu Signale von in den Bordküchen und der Kabine vorgesehenen Temperatursensoren sowie die Signale eines Umgebungstemperatursensors aus. Falls die Temperatur in der Kabine zu hoch sein sollte, kann die Steuerung das Ventil öffnen und dadurch die Kühlleistung der Kabinenklimaanlage erhöhen.

Dokument EP 1 808 373 A2 offenbart beheizte Bodenplatten für ein Flugzeug. Die Bodenplatten umfassen eine wärmeerzeugende Schicht mit einer Stromversorgungsleitungen aufweisenden elektrischen Heizung und eine unterhalb der wärmeerzeugenden Schicht vorgesehene Auflageebene. Eine Steuerung steuert den an die Heizung abgegebenen Strom und dadurch die durch die Schicht erzeugte Wärmemenge, wobei die Steuerung in die Auflageebene und/oder die wärmeerzeugende Schicht integriert ist.

Diese Aufgabe wird durch ein System zur Kühlung und/oder Beheizung von zu kühlenden und/oder zu beheizenden Luftfahrzeugeinrichtungen mit den Merkmalen des Anspruchs 1 sowie ein Verfahren zur Kühlung und/oder Beheizung von zu kühlenden und/oder zu beheizenden Luftfahrzeugeinrichtungen mit den Merkmalen des Anspruchs 6 gelöst.

Das erfindungsgemäße System zur Kühlung und/oder Beheizung von zu kühlenden und/oder zu beheizenden Luftfahrzeugeinrichtungen umfasst ein erstes, einer ersten zu kühlenden und/oder zu beheizenden Luftfahrzeugeinrichtung zugeordnetes Einzelkühl- und/oder -heizsystem. Ferner umfasst das erfindungsgemäße System ein zweites, einer zweiten zu kühlenden und/oder zu beheizenden Luftfahrzeugeinrichtung zugeordnetes Einzelkühl- und/oder -heizsystem. Die zu kühlenden und/oder zu beheizenden Luftfahrzeugeinrichtungen können beliebige an Bord des Luftfahrzeugs vorhandene Komponenten oder Systeme, wie z.B. elektrische oder elektronische Einrichtungen, aber auch Teile einer Passagierkabine oder eines Frachtraums des Luftfahrzeugs sein. Die Einzelkühl- und/oder -heizsysteme dienen dazu, die Luftfahrzeugeinrichtungen, je nach Bedarf, mit Kühl- und/oder Heizenergie zu versorgen. Dabei können die Einzelkühl- und/oder -heizsysteme so ausgelegt sein, dass sie lediglich Kühl- oder Heizenergie erzeugen können. Alternativ dazu können die Einzelkühl- und/oder -heizsysteme jedoch auch so ausgelegt sein, dass sie die Luftfahrzeugeinrichtungen beispielsweise in Abhängigkeit der Betriebssituation des Luftfahrzeugs mit Kühl- oder Heizenergie versorgen können.

Das erfindungsgemäße System zur Kühlung und/oder Beheizung von zu kühlenden und/oder zu beheizenden Luftfahrzeugeinrichtungen umfasst ferner eine Kühl- und/oder Heizenergiezufuhreinrichtung, die dazu eingerichtet ist, von dem ersten und/oder dem zweiten Einzelkühl- und/oder -heizsystem erzeugte Kühl- und/oder Heizenergie der ersten und/oder der zweiten zu kühlenden und/oder zu beheizenden Luftfahrzeugeinrichtung zuzuführen. Mit anderen Worten, die Kühl- und/oder Heizenergiezufuhreinrichtung dient dazu, von dem ersten und/oder dem zweiten Einzelkühl- und/oder -heizsystem erzeugte Kühl- und/oder Heizenergie auf die erste und/oder die zweite zu kühlende und/oder zu beheizende Luftfahrzeugeinrichtung zu verteilen.

Zu diesem Zweck kann die Kühl- und/oder Heizenergiezufuhreinrichtung beispielsweise ein entsprechend gestaltetes Leitungssystem umfassen, das dazu in der Lage ist, von dem ersten Einzelkühl- und/oder -heizsystem erzeugte Kühl- und/oder Heizenergie entweder nur der ersten oder nur der zweiten, bei Bedarf aber auch der ersten und der zweiten zu kühlenden und/oder zu beheizenden Luftfahrzeugeinrichtung zuzuführen. In ähnlicher Weise kann das Leitungssystem der Kühl- und/oder Heizenergiezufuhreinrichtung die Zufuhr von Kühl- und/oder Heizenergie, die von dem zweiten Einzelkühl- und/oder -heizsystem erzeugt wird, zu lediglich der ersten oder lediglich der zweiten, aber auch zu der ersten und der zweiten zu kühlenden und/oder zu beheizenden Luftfahrzeugeinrichtung ermöglichen. Die Steuerung der Kühl- und/oder Heizenergieströme durch das Leitungssystem der Kühl- und/oder Heizenergiezufuhreinrichtung kann beispielsweise durch entsprechende in den Leitungen des Leitungssystems angeordnete Ventile erfolgen.

Schließlich umfasst das erfindungsgemäße System eine Steuereinrichtung, die dazu eingerichtet ist, Signale zu empfangen und zu verarbeiten, die für den Kühl- und/oder Heizbedarf der ersten zu kühlenden und/oder zu beheizenden Luftfahrzeugeinrichtung, den Kühl- und/oder Heizbedarf der zweiten zu kühlenden und/oder zu beheizenden Luftfahrzeugeinrichtung sowie den Auslastungszustand des ersten und/oder des zweiten Einzelkühl- und/oder -heizsystems charakteristisch sind. Die der Steuereinrichtung zuzuführenden Signale können beispielsweise durch entsprechende der ersten und der zweiten Luftfahrzeugeinrichtung bzw. dem ersten und dem zweiten Einzelkühl- und/oder -heizsystem zugeordnete Sensoren bereitgestellt werden. Die der ersten und der zweiten Luftfahrzeugeinrichtung zugeordneten Sensoren können als Temperatursensoren, aber auch als Sensoren ausgebildet sein, die für den Betriebszustand der ersten und der zweiten Luftfahrzeugeinrichtung charakteristische Leistungsparameter der ersten und der zweiten Luftfahrzeugeinrichtung erfassen. In ähnlicher Weise können die dem ersten und dem zweiten Einzelkühl- und/oder -heizsystem zugeordneten Sensoren als Sensoren ausgebildet sein, die für den Betriebszustand des ersten und des zweiten Einzelkühl- und/oder -heizsystems charakteristische Leistungsparameter des ersten und des zweiten Einzelkühl- und/oder -heizsystems erfassen. Wesentlich ist lediglich, dass die Steuereinrichtung anhand der von ihr empfangenen Signale dazu in der Lage ist, den aktuellen Kühl- und/oder Heizbedarf der ersten und der zweiten zu kühlenden und/oder zu beheizenden Luftfahrzeugeinrichtung sowie den Auslastungszustand des ersten und/oder des zweiten Einzelkühl- und/oder -heizsystems zu ermitteln.

Auf der Grundlage der von ihr empfangenen Signale steuert die Steuereinrichtung den Betrieb des ersten und/oder des zweiten Einzelkühl- und/oder -heizsystems und/oder die Zufuhr von Kühl- und/oder Heizenergie, die von dem ersten und/oder dem zweiten Einzelkühl- und/oder -heizsystem erzeugt wird, zu der ersten und/oder der zweiten zu kühlenden und/oder zu beheizenden Luftfahrzeugeinrichtung. Die von dem ersten Einzelkühl- und/oder -heizsystem erzeugte Kühlenergie wird somit nicht länger ausschließlich der ersten zu kühlenden und/oder zu beheizenden Luftfahrzeugeinrichtung zugeführt, sondern kann bei Bedarf mittels der Kühl- und/oder Heizenergiezufuhreinrichtung unter der Steuerung der Steuereinrichtung auch der zweiten zu kühlenden und/oder zu beheizenden Luftfahrzeugeinrichtung zugeführt werden. Ein derartiger Betrieb des erfindungsgemäßen Systems ist beispielsweise dann sinnvoll, wenn das der zweiten zu kühlenden und/oder zu beheizenden Luftfahrzeugeinrichtung zugeordnete Einzelkühl- und/oder -heizsystem bereits stark ausgelastet ist, das der ersten zu kühlenden und/oder zu beheizenden Luftfahrzeugeinrichtung zugeordnete Einzelkühl- und/oder -heizsystem dagegen noch Kühl- und/oder Heizkapazität hat. Umgekehrt kann es sinnvoll sein, bei einer starken Auslastung des ersten, der ersten zu kühlenden und/oder zu beheizenden Luftfahrzeugeinrichtung zugeordneten Einzelkühl- und/oder -heizsystems auch von dem zweiten, der zweiten zu kühlenden und/oder zu beheizenden Luftfahrzeugeinrichtung zugeordneten Einzelkühl- und/oder -heizsystem erzeugte Kühl- und/oder Heizenergie zur Versorgung der ersten zu kühlenden und/oder zu beheizenden Luftfahrzeugeinrichtung zu nutzen.

Das erfindungsgemäße System zur Kühlung und/oder Beheizung von zu kühlenden und/oder zu beheizenden Luftfahrzeugeinrichtungen sorgt somit für eine Auflösung der starren Zuordnung von Einzelkühl- und/oder -heizsystemen zu einzelnen zu kühlenden und/oder zu beheizenden Luftfahrzeugeinrichtungen. Stattdessen wird ein Gesamtsystem bereitgestellt, das für eine optimierte Verteilung von Kühlenergie- und/oder Heizenergieströmen, die von den Einzelkühl- und/oder -heizsystemen erzeugt werden, auf die Kühl- und/oder Heizenergieverbraucher, d.h. die zu kühlenden und/oder zu beheizenden Luftfahrzeugeinrichtungen sorgt. Dadurch ist es nicht länger erforderlich, die den einzelnen zu kühlenden und/oder zu beheizenden Luftfahrzeugeinrichtungen zugeordneten Einzelkühl- und/oder -heizsysteme so zu dimensionieren und auszulegen, dass sie auch in Spitzenlastzeiten den maximalen Kühl- und/oder Heizbedarf der zu kühlenden und/oder zu beheizenden Luftfahrzeugeinrichtungen decken können. Vielmehr muss lediglich das Gesamtsystem dazu in der Lage sein, die von den zu kühlenden und/oder zu beheizenden Luftfahrzeugeinrichtungen im Betrieb benötigte Kühl- und/oder Heizenergie zur Verfügung zu stellen. Die Einzelkühl- und/oder -heizsysteme können dadurch nicht nur leichter, sondern auch kleiner und damit einbauraumsparender ausgelegt werden als dies in Systemen mit einer starren Zuordnung von Einzelkühl- und/oder -heizsystemen zu zu kühlenden und/oder zu beheizenden Luftfahrzeugeinrichtungen der Fall sein kann. Darüber hinaus ermöglicht das erfindungsgemäße System die Realisierung von Synergien der Einzelkühl- und/oder -heizsysteme, die eine weitere Gewichts- und Volumenreduktion des Gesamtsystems ermöglichen können.

Das erfindungsgemäße System zur Kühlung und/oder Beheizung von zu kühlenden und/oder zu beheizenden Luftfahrzeugeinrichtungen kann lediglich zwei Einzelkühl- und/oder -heizsysteme umfassen. Alternativ dazu ist es jedoch auch denkbar, das erfindungsgemäße System mit einer beliebigen Anzahl von Einzelkühl- und/oder - heizsystemen auszustatten. Die Kühl- und/oder Heizenergiezufuhreinrichtung ist dann vorzugsweise dazu eingerichtet, mindestens eine, vorzugsweise alle von dem erfindungsgemäßen System mit Kühl- und/oder Heizenergie zu versorgenden Luftfahrzeugeinrichtung(en) so mit den Einzelkühl- und/oder -heizsystemen zu koppeln, dass die Luftfahrzeugeinrichtung(en) von mindestens zwei, vorzugsweise allen Einzelkühl- und/oder -heizsystemen mit Kühl- und/oder Heizenergie versorgt werden können.

Ferner ist die Steuereinrichtung des erfindungsgemäßen Systems zur Kühlung und/oder Beheizung von zu kühlenden und/oder zu beheizenden Luftfahrzeugeinrichtungen dazu eingerichtet, den Betrieb des ersten und/oder des zweiten Einzelkühl- und/oder -heizsystems und/oder die Zufuhr von Kühl- und/oder Heizenergie, die von dem ersten und/oder dem zweiten Einzelkühl- und/oder -heizsystem erzeugt wird, zu der ersten und/oder der zweiten zu kühlenden und/oder zu beheizenden Luftfahrzeugeinrichtung derart zu steuern, dass der zur Erzeugung der Kühl- und/oder Heienergie durch das erste und/oder das zweite Einzelkühl- und/oder -heizsystem erforderliche Gesamtenergiebedarf des ersten und des zweiten Einzelkühl- und/oder - heizsystems minimiert wird. Mit anderen Worten, die Steuereinrichtung steuert den Betrieb der Einzelkühl- und/oder -heizsysteme sowie die Verteilung der von den Einzelkühl- und/oder -heizsystemen erzeugten Kühl- und/oder Heizenergie derart, dass der Energieverbrauch des Gesamtsystems optimiert wird. Beispielsweise kann die Steuereinheit den Betrieb der Einzelkühl- und/oder -heizsysteme sowie den Betrieb der Kühl- und/oder Heizenergiezufuhreinrichtung derart steuern, dass ein bereits mit hoher Auslastung und folglich hohem Energiebedarf betriebenes Einzelkühl- und/oder -heizsystem bei steigendem Kühl- und/oder Heizenergiebedarf der dem Einzelkühl- und/oder -heizsystem zugeordneten Luftfahrzeugeinrichtung nicht in energieintensiver Art und Weise mit noch höherer Auslastung betrieben wird, sondern dass stattdessen der zusätzliche Kühl- und/oder Heizenergiebedarf der Luftfahrzeugeinrichtung durch ein weniger ausgelastetes und folglich energieeffizienter betreibbares Einzelkühl- und/oder -heizsystem gedeckt wird.

Die Steuereinrichtung ist schließlich dazu eingerichtet, den Betrieb des ersten und/oder des zweiten Einzelkühl- und/oder -heizsystems und/oder die Zufuhr von Kühl- und/oder Heizenergie, die von dem ersten und/oder dem zweiten Einzelkühl- und/oder -heizsystem erzeugt wird, zu der ersten und/oder der zweiten zu kühlenden und/oder zu beheizenden Luftfahrzeugeinrichtung unter Berücksichtigung auslastungsabhängiger Energiebedarfsdaten des ersten und des zweiten Einzelkühl- und/oder -heizsystems zu steuern. Wenn die Steuereinrichtung stets auf auslastungsabhängige Energiebedarfsdaten des ersten und des zweiten Einzelkühl- und/oder -heizsystems zugreifen kann, kann die Steuereinrichtung auf besonders einfache und komfortable Art und Weise dafür sorgen, dass der Gesamtenergiebedarf des erfindungsgemäßen Systems zur Kühlung und/oder Beheizung von zu kühlenden und/oder zu beheizenden Luftfahrzeugeinrichtungen minimiert wird.

Beispielsweise kann die Steuereinrichtung dazu eingerichtet sein, auf in einer Datenbank gespeicherte auslastungsabhängige Energiebedarfsdaten des ersten und/oder des zweiten Einzelkühl- und/oder -heizsystems zuzugreifen. In der Datenbank können die Energiebedarfsdaten des ersten und des zweiten Einzelkühl- und/oder - heizsystems beispielsweise in Form einer Lookup-Tabelle hinterlegt sein. Zusätzlich oder alternativ dazu kann die Steuereinrichtung jedoch auch dazu eingerichtet sein, auslastungsabhängige Energiebedarfsdaten des ersten und des zweiten Einzelkühl- und/oder -heizsystems anhand entsprechender Gleichungen zu berechnen. Bei einer derartigen Anordnung sind die auslastungsabhängigen Energiebedarfsdaten des ersten und des zweiten Einzelkühl- und/oder -heizsystems nicht als fixe Daten, sondern in parametrischer Form gespeichert.

Durch die Ausgestaltung, d.h. die Auslegung und Dimensionierung der Einzelkühl- und/oder -heizsysteme wird die maximale Gesamtkühl- und/oder Heizenergieerzeugungskapazität des erfindungsgemäßen Systems zur Kühlung und/oder Beheizung von zu kühlenden und/oder zu beheizenden Luftfahrzeugeinrichtungen festgelegt. Die Steuereinrichtung des erfindungsgemäßen Systems zur Kühlung und/oder Beheizung von zu kühlenden und/oder zu beheizenden Luftfahrzeugeinrichtungen kann ferner dazu eingerichtet sein, bei der Steuerung des Betriebs des ersten und/oder des zweiten Einzelkühl- und/oder -heizsystems und/oder der Zufuhr von Kühl- und/oder Heizenergie, die von dem ersten und/oder dem zweiten Einzelkühl- und/oder -heizsystem erzeugt wird, zu der ersten und/oder der zweiten zu kühlenden und/oder zu beheizenden Luftfahrzeugeinrichtung der Versorgung der ersten oder der zweiten zu kühlenden und/oder zu beheizenden Luftfahrzeugeinrichtung mit Kühl- und/oder Heizenergie gegenüber der Versorgung der zweiten oder der ersten zu kühlenden und/oder zu beheizenden Luftfahrzeugeinrichtung mit Kühl- und/oder Heizenergie eine höhere Priorität einzuräumen, wenn der Gesamtkühl- und/oder Heizbedarf der ersten und der zweiten zu kühlenden und/oder zu beheizenden Luftfahrzeugeinrichtung die maximale Gesamtkühl- und/oder Heizenergieerzeugungskapazität des ersten und des zweiten Einzelkühl- und/oder -heizsystems übersteigt. Mit anderen Worten, wenn der Gesamtkühl- und/oder Heizbedarf aller mit Kühl- und/oder Heizenergie zu versorgenden Luftfahrzeugeinrichtungen die Gesamtkühl- und/oder Heizenergieerzeugungskapazität der Einzelkühl- und/oder -heizsysteme des Gesamtsystems überschreitet, priorisiert die Steuereinrichtung eine oder mehrere zu kühlende und/oder zu beheizende Luftfahrzeugeinrichtung(en) bezüglich der Versorgung mit Kühl- und/oder Heizenergie.

Vorzugsweise ist die Steuereinrichtung dazu eingerichtet, bei der Priorisierung der ersten oder der zweiten zu kühlenden und/oder zu beheizenden Luftfahrzeugeinrichtung gegenüber der zweiten oder der ersten zu kühlenden und/oder zu beheizenden Luftfahrzeugeinrichtung bei der Versorgung mit Kühl- und/oder Heizenergie Daten zu berücksichtigen, die für die Relevanz der ersten und/oder der zweiten zu kühlenden und/oder zu beheizenden Luftfahrzeugeinrichtung für den Betrieb des Luftfahrzeugs charakteristisch sind. Dadurch kann die Steuereinrichtung beispielsweise einer sicherheitsrelevanten Luftfahrzeugeinrichtung bei der Versorgung mit Kühl- und/oder Heizenergie eine höhere Priorität einräumen als einem System, das lediglich dem Komfort oder der Unterhaltung von sich an Bord des Luftfahrzeugs befindenden Passagieren dient. Es versteht sich jedoch, dass das Gesamtsystem dennoch so ausgelegt und dimensioniert sein sollte, dass stets, d.h. in allen Betriebssituationen des Luftfahrzeugs, alle für einen ordnungsgemäßen und sicheren Betrieb des Luftfahrzeugs erforderlichen Kühl- und/oder Heizaufgaben erfüllt werden können.

Die für die Relevanz der ersten und/oder der zweiten zu kühlenden und/oder zu beheizenden Luftfahrzeugeinrichtung für den Betrieb des Luftfahrzeugs charakteristischen Daten sind vorzugsweise vom Betriebszustand des Luftfahrzeugs abhängige Daten. Das heißt, die Daten berücksichtigen beispielsweise, ob sich das Luftfahrzeug im Bodenbetrieb oder im Flugbetrieb befindet. Ferner ist die Steuereinrichtung vorzugsweise dazu eingerichtet, Signale zu empfangen und zu verarbeiten, die für den Betriebszustand des Luftfahrzeugs charakteristisch sind, und die Priorisierung der ersten oder der zweiten zu kühlenden und/oder zu beheizenden Luftfahrzeugeinrichtung gegenüber der zweiten oder der ersten zu kühlenden und/oder zu beheizenden Luftfahrzeugeinrichtung bei der Versorgung mit Kühl- und/oder Heizenergie in Abhängigkeit der für den Betriebszustand des Luftfahrzeugs charakteristischen Signale durchzuführen.

Die Steuereinrichtung des erfindungsgemäßen Systems zur Kühlung und/oder Beheizung von zu kühlenden und/oder zu beheizenden Luftfahrzeugeinrichtungen kann lediglich der Steuerung des Betriebs der Einzelkühl- und/oder -heizsysteme des Gesamtsystems sowie der Steuerung der Verteilung der von den Einzelkühl- und/oder - heizsystemen erzeugten Kühl- und/oder Heizenergie auf die zu kühlenden und/oder zu beheizenden Luftfahrzeugeinrichtungen dienen. Zusätzlich kann die Steuereinrichtung jedoch auch dazu eingerichtet sein, auf den Betrieb der zu kühlenden und/oder zu beheizenden Luftfahrzeugeinrichtungen Einfluss zu nehmen. Beispielsweise kann die Steuereinrichtung dazu eingerichtet sein, in Betriebssituationen des Gesamtsystems, in denen die von dem Gesamtsystem erzeugte Kühl- und/oder Heizenergiemenge nicht ausreicht, alle zu kühlenden und/oder zu beheizenden Luftfahrzeugeinrichtungen mit ausreichend Kühl- und/oder Heizenergie zu versorgen, die Leistung und damit den Kühl- und/oder Heizenergiebedarf einzelner, vorzugsweise in dieser Betriebssituation weniger relevanter Luftfahrzeugeinrichtungen zu verringern. Die Steuereinrichtung kann unmittelbar dazu eingerichtet sein, in den Betrieb der zu kühlenden und/oder zu beheizenden Luftfahrzeugeinrichtungen einzugreifen. Alternativ dazu ist es jedoch auch denkbar, dass die Steuereinrichtung entsprechende Signale an weitere Steuereinrichtungen zur Steuerung des Betriebs der zu kühlenden und/oder zu beheizenden Luftfahrzeugeinrichtungen sendet.

Die Steuereinrichtung des erfindungsgemäßen Systems zur Kühlung und/oder Beheizung von zu kühlenden und/oder zu beheizenden Luftfahrzeugeinrichtungen kann dazu eingerichtet sein, den Betrieb der Einzelkühl- und/oder -heizsysteme des Gesamtsystems und/oder den Betrieb der zu kühlenden und/oder zu beheizenden Luftfahrzeugeinrichtungen digital zu steuern, d.h. Einzelkühl- und/oder -heizsysteme und/oder zu kühlende und/oder zu beheizende Luftfahrzeugeinrichtungen, je nach Bedarf, an- oder auszuschalten. Alternativ oder zusätzlich dazu kann die Steuereinrichtung jedoch auch dazu eingerichtet sein, den Betrieb der Einzelkühl- und/oder - heizsysteme des Gesamtsystems und/oder den Betrieb der zu kühlenden und/oder zu beheizenden Luftfahrzeugeinrichtungen derart zu steuern, dass eine stufenweise oder stufenlose Anpassung der Leistung der Einzelkühl- und/oder -heizsysteme und/oder der zu kühlenden und/oder zu beheizenden Luftfahrzeugeinrichtungen erfolgt.

Bei einem erfindungsgemäßen Verfahren zur Kühlung und/oder Beheizung von zu kühlenden und/oder zu beheizenden Luftfahrzeugeinrichtungen wird ein erstes, einer ersten zu kühlenden und/oder zu beheizenden Luftfahrzeugeinrichtung zugeordnetes Einzelkühl- und/oder -heizsystem bereitgestellt. Ferner wird ein zweites, einer zweiten zu kühlenden und/oder zu beheizenden Luftfahrzeugeinrichtung zugeordnetes Einzelkühl- und/oder -heizsystem bereitgestellt. Schließlich wird eine Kühl- und/oder Heizenergiezufuhreinrichtung bereitgestellt, die dazu eingerichtet ist, von dem ersten und/oder dem zweiten Einzelkühl- und/oder -heizsystem erzeugte Kühl- und/oder Heizenergie der ersten und/oder der zweiten zu kühlenden und/oder zu beheizenden Luftfahrzeugeinrichtung zuzuführen. Einer Steuereinrichtung werden Signale zugeführt, die für den Kühl- und/oder Heizbedarf der ersten und/oder der zweiten zu kühlenden und/oder zu beheizenden Luftfahrzeugeinrichtung sowie den Auslastungszustand des ersten und/oder des zweiten Einzelkühl- und/oder -heizsystems charakteristisch sind. Der Betrieb des ersten und/oder des zweiten Einzelkühl- und/oder - heizsystems und/oder die Zufuhr von Kühl- und/oder Heizenergie, die von dem ersten und/oder dem zweiten Einzelkühl- und/oder -heizsystem erzeugt wird, zu der ersten und/oder der zweiten zu kühlenden und/oder zu beheizenden Luftfahrzeugeinrichtung wird mittels der Steuereinrichtung auf der Grundlage dieser Signale gesteuert.

Dabei wird der Betrieb des ersten und/oder des zweiten Einzelkühl- und/oder - heizsystems und/oder die Zufuhr von Kühl- und/oder Heizenergie, die von dem ersten und/oder dem zweiten Einzelkühl- und/oder -heizsystem erzeugt wird, zu der ersten und/oder der zweiten zu kühlenden und/oder zu beheizenden Luftfahrzeugeinrichtung derart gesteuert, dass der zur Erzeugung der Kühl- und/oder Heizenergie durch das erste und/oder das zweite Einzelkühl- und/oder -heizsystem erforderliche Gesamtenergiebedarf des ersten und des zweiten Einzelkühl- und/oder -heizsystems minimiert wird.

Der Betrieb des ersten und/oder des zweiten Einzelkühl- und/oder -heizsystems und/oder die Zufuhr von Kühl- und/oder Heizenergie, die von dem ersten und/oder dem zweiten Einzelkühl- und/oder -heizsystem erzeugt wird, zu der ersten und/oder der zweiten zu kühlenden und/oder zu beheizenden Luftfahrzeugeinrichtung wird unter Berücksichtigung auslastungsabhängiger Energiebedarfsdaten des ersten und des zweiten Einzelkühl- und/oder -heizsystems gesteuert.

Die Steuereinrichtung kann auf in einer Datenbank gespeicherte auslastungsabhängige Energiebedarfsdaten des ersten und des zweiten Einzelkühl- und/oder - heizsystems zugreifen. Zusätzlich oder alternativ dazu kann die Steuereinrichtung auslastungsabhängige Energiebedarfsdaten des ersten und des zweiten Einzelkühl- und/oder -heizsystems anhand entsprechender Gleichungen berechnen.

Bei der Steuerung des Betriebs des ersten und/oder des zweiten Einzelkühl- und/oder -heizsystems und/oder der Zufuhr von Kühl- und/oder Heizenergie, die von dem ersten und/oder dem zweiten Einzelkühl- und/oder -heizsystem erzeugt wird, zu der ersten und/oder der zweiten zu kühlenden und/oder zu beheizenden Luftfahrzeugeinrichtung kann der Versorgung der ersten oder der zweiten zu kühlenden und/oder zu beheizenden Luftfahrzeugeinrichtung mit Kühl- und/oder Heizenergie gegenüber der Versorgung der zweiten oder der ersten zu kühlenden und/oder zu beheizenden Luftfahrzeugeinrichtung mit Kühl- und/oder Heizenergie eine höhere Priorität eingeräumt werden, wenn der Gesamtkühl- und/oder Heizbedarf der ersten und der zweiten zu kühlenden und/oder zu beheizenden Luftfahrzeugeinrichtung die maximale Gesamtkühl- und/oder Heizenergieerzeugungskapazität des ersten und des zweiten Einzelkühl- und/oder -heizsystems übersteigt.

Bei der Priorisierung der ersten oder der zweiten zu kühlenden und/oder zu beheizenden Luftfahrzeugeinrichtung gegenüber der zweiten oder der ersten zu kühlenden und/oder zu beheizenden Luftfahrzeugeinrichtung bei der Versorgung mit Kühl- und/oder Heizenergie kann die Steuereinrichtung Daten berücksichtigen, die für die Relevanz der ersten und/oder der zweiten zu kühlenden und/oder zu beheizenden Luftfahrzeugeinrichtung für den Betrieb des Luftfahrzeugs charakteristisch sind.

Die für die Relevanz der ersten und/oder der zweiten zu kühlenden und/oder zu beheizenden Luftfahrzeugeinrichtung für den Betrieb des Luftfahrzeugs charakteristischen Daten können vom Betriebszustand des Luftfahrzeugs abhängige Daten sein. Die Steuereinrichtung kann Signale empfangen und verarbeiten, die für den Betriebszustand des Luftfahrzeug charakteristisch sind und die Priorisierung der ersten oder der zweiten zu kühlenden und/oder zu beheizenden Luftfahrzeugeinrichtung gegenüber der zweiten oder der ersten zu kühlenden und/oder zu beheizenden Luftfahrzeugeinrichtung bei der Versorgung mit Kühl- und/oder Heizenergie in Abhängigkeit der für den Betriebszustand des Luftfahrzeugs charakteristischen Signale durchführen.

Ein bevorzugtes Ausführungsbeispiel der Erfindung wird nun anhand der beigefügten schematischen Figur näher erläutert, die den Aufbau eines erfindungsgemäßen Systems zur Kühlung und/oder Beheizung von zu kühlenden und/oder zu beheizenden Luftfahrzeugeinrichtungen zeigt.

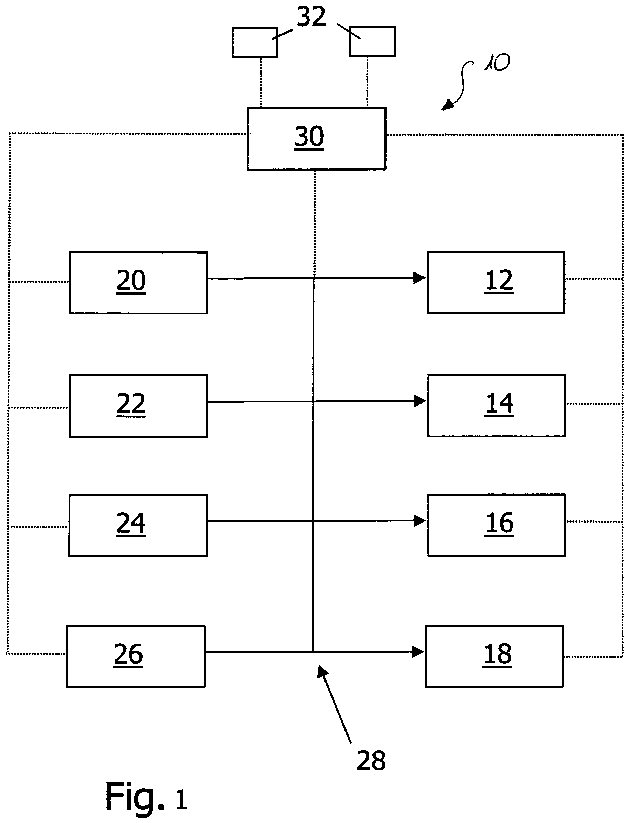

Ein in der Figur allgemein mit 10 bezeichnetes System dient dazu, eine Reihe von an Bord eines Luftfahrzeugs vorhandene Luftfahrzeugeinrichtungen 12, 14, 16, 18, je nach Bedarf, mit Kühl- und/oder Heizenergie zu versorgen. In dem gezeigten Ausführungsbeispiel sind die Luftfahrzeugeinrichtungen 12, 14 so ausgestaltet, dass ihnen in allen Betriebssituationen Kühlenergie zugeführt werden muss, um einen ordnungsgemäßen Betrieb der Luftfahrzeugeinrichtungen 12, 14 zu gewährleisten. Die Luftfahrzeugeinrichtung 16 ist dagegen eine Luftfahrzeugeinrichtung, der im Betrieb Heizenergie zugeführt werden muss. Die Luftfahrzeugeinrichtung 18 muss dagegen in Abhängigkeit ihres Betriebszustands und des Betriebszustands des Luftfahrzeugs wahlweise entweder gekühlt oder beheizt werden.

In dem in der Figur gezeigten Ausführungsbeispiel dient das System 10 dazu, vier Luftfahrzeugeinrichtungen 12, 14, 16, 18 mit Kühl- und/oder Heizenergie zu versorgen. Es versteht sich jedoch, dass das System 10 auch dazu eingerichtet sein kann, weniger als vier oder mehr als vier Luftfahrzeugeinrichtungen mit Kühl- und/oder Heizenergie zu versorgen. Darüber hinaus kann die Ausgestaltung der Luftfahrzeugeinrichtungen dahingehend variieren, ob die Luftfahrzeugeinrichtungen nur mit Kühlenergie, nur mit Heizenergie oder, je nach Betriebszustand, mit Kühl- und Heizenergie zu versorgen sind.

Den einzelnen Luftfahrzeugeinrichtungen 12, 14, 16, 18 sind jeweils entsprechende Einzelkühl- und/oder -heizsysteme 20, 22, 24, 26 zugeordnet. Die Einzelkühl- und/oder -heizsysteme 20, 22, 24, 26 sind jeweils so dimensioniert und ausgelegt, dass sie primär der Versorgung der ihnen zugeordneten Luftfahrzeugeinrichtungen 12, 14, 16, 18 mit Kühl- und/oder Heizenergie dienen. Eine ein entsprechend gestaltetes Leitungssystem umfassende Kühl- und/oder Heizenergiezufuhreinrichtung 28 ist jedoch dazu eingerichtet, von den Einzelkühl- und/oder -heizsystemen 20, 22, 24, 26 erzeugte Kühl- und/oder Heizenergie allen Luftfahrzeugeinrichtungen 12, 14, 16, 18 zuzuführen. Mit anderen Worten, mit Hilfe der Kühl- und/oder Heizenergiezufuhreinrichtung 28 kann jede Luftfahrzeugeinrichtung 12, 14, 16, 18 von jedem Einzelkühl- und/oder -heizsystem 20, 22, 24, 26 mit Kühl- und/oder Heizenergie versorgt werden. Die Steuerung der Kühl- und/oder Heizenergieströme durch das Leitungssystem der Kühl- und/oder Heizenergiezufuhreinrichtung 28 kann beispielsweise mit Hilfe entsprechender in dem Leitungssystem angeordneter Ventile erfolgen.

Ferner umfasst das System 10 eine Steuereinrichtung 30. Die Steuereinrichtung 30 ist in Form einer elektronischen Steuereinrichtung ausgebildet und dazu eingerichtet, Signale zu empfangen und zu verarbeiten, die für den Kühl- und/oder Heizbedarf der Luftfahrzeugeinrichtungen 12, 14, 16, 18 charakteristisch sind. Mit anderen Worten, die Steuereinrichtung 30 empfängt von entsprechenden, den einzelnen Luftfahrzeugeinrichtungen 12, 14, 16, 18 zugeordneten Sensoren, die beispielsweise in Form von Temperatursensoren oder das aktuelle Leistungsniveau der Luftfahrzeugeinrichtungen 12, 14, 16, 18 erfassenden Sensoren ausgebildet sein können, Signale, aus denen die Steuereinrichtung 30 den aktuellen Kühl- und/oder Heizbedarf der Luftfahrzeugeinrichtungen 12, 14, 16, 18 ableiten kann. Ferner empfängt die Steuereinrichtung 30 Signale, die der Steuereinrichtung 30 Informationen über den Auslastungszustand der Einzelkühl- und/oder -heizsysteme 20, 22, 24, 26 liefern. Diese Signale werden von den Einzelkühl- und/oder -heizsystemen 20, 22, 24, 26 zugeordneten Sensoren bereitgestellt.

Anhand der ihr von den den Einzelkühl- und/oder -heizsystemen 20, 22, 24, 26 zugeordneten Sensoren zugeführten, für den Auslastungszustand der Einzelkühl- und/oder -heizsysteme 20, 22, 24, 26 charakteristischen Signalen ermittelt die Steuereinrichtung 30 entsprechende auslastungsabhängige Energiebedarfsdaten der Einzelkühl- und/oder -heizsysteme 20, 22, 24, 26. Die auslastungsabhängigen Energiebedarfsdaten können entweder in einer Datenbank gespeichert sein oder von der Steuereinrichtung 30 anhand entsprechender Gleichungen berechnet werden. Im Ergebnis kann die Steuereinrichtung 30 bei der Steuerung des Betriebs der Einzelkühl- und/oder -heizsysteme 20, 22, 24, 26 und/oder der Zufuhr der von den Einzelkühl- und/oder -heizsystemen 20, 22, 24, 26 erzeugten Kühl- und/oder Heizenergie zu den Luftfahrzeugeinrichtungen 12, 14, 16, 18 die auslastungsabhängigen Energiebedarfsdaten der Einzelkühl- und/oder -heizsysteme 20, 22, 24, 26 berücksichtigen.

Dadurch wird die Steuereinrichtung 30 in die Lage versetzt, die Zufuhr der von den Einzelkühl- und/oder -heizsystemen 20, 22, 24, 26 erzeugten Kühl- und/oder Heizenergie und/oder den Betrieb der Einzelkühl- und/oder -heizsysteme 20, 22, 24, 26 derart zu steuern, dass der zur Erzeugung der Kühl- und/oder Heizenergie durch die Einzelkühl- und/oder -heizsysteme 20, 22, 24, 26 erforderliche Gesamtenergiebedarf der Einzelkühl- und/oder -heizsysteme 20, 22, 24, 26 minimiert wird. Beispielsweise kann die Steuereinrichtung 30 dafür sorgen, dass in einem Fall, in dem die Luftfahrzeugeinrichtung 14 zusätzliche Kühlenergie benötigt, das der Luftfahrzeugeinrichtung 14 zugeordnete Einzelkühlsystem 22 jedoch bereits mit hoher Auslastung betrieben wird, der Kühlbedarf der Luftfahrzeugeinrichtung 14 durch das eigentlich der Luftfahrzeugeinrichtung 12 zugeordnete, aber weniger ausgelastete Einzelkühlsystem 20 gedeckt wird, wenn dadurch eine Minimierung des Gesamtenergiebedarfs der Einzelkühlsysteme 20, 22 möglich wird.

Grundsätzlich kann im Betrieb des Systems 10 auch der Fall auftreten, dass der Gesamtkühl- und/oder Heizbedarf der Luftfahrzeugeinrichtungen 12, 14, 16, 18 die maximale Gesamtkühl- und/oder Heizenergieerzeugungskapazität der Einzelkühl- und/oder -heizsysteme 20, 22, 24, 26 übersteigt. In einem derartigen Fall empfängt die Steuereinrichtung 30 von entsprechenden Sensoren 32 Signale, die für den Betriebszustand des Luftfahrzeugs charakteristisch sind. Beispielsweise kann die Steuereinrichtung 30 anhand der ihr von den Sensoren 32 zugeführten Signale feststellen, ob sich das Luftfahrzeug am Boden oder im Flugbetrieb befindet.

In Abhängigkeit des Betriebszustands des Luftfahrzeugs priorisiert die Steuereinrichtung 30 die Luftfahrzeugeinrichtungen 12, 14, 16, 18 hinsichtlich ihrer Relevanz für den Betrieb des Luftfahrzeugs. Beispielsweise genießen sicherheitsrelevante Luftfahrzeugeinrichtungen höchste Priorität, wohingegen die Steuereinrichtung 30 Luftfahrzeugeinrichtungen, die lediglich dem Komfort von sich an Bord des Luftfahrzeugs befindenden Personen dienen, eine lediglich geringere Priorität einräumt. Die Steuereinrichtung 30 steuert dann den Betrieb der Einzelkühl- und/oder -heizsysteme 20, 22, 24, 26 sowie die Verteilung der von den Einzelkühl- und/oder -heizsystemen 20, 22, 24, 26 erzeugten Kühl- und/oder Heizenergie auf die Luftfahrzeugeinrichtungen 12, 14, 16, 18 derart, dass zunächst die Luftfahrzeugeinrichtungen mit Kühl- und/oder Heizenergie versorgt werden, denen die Steuereinrichtung 30 in einem bestimmten Betriebszustand des Luftfahrzeugs die höchste Priorität einräumt. Die Einzelkühl- und/oder -heizsysteme 20, 22, 24, 26 werden in einer derartigen Situation vorzugsweise mit maximaler Auslastung betrieben.

Falls gewünscht oder erforderlich, kann die Steuereinrichtung 30 auch auf den Betrieb der Luftfahrzeugeinrichtungen 12, 14, 16, 18 Einfluss nehmen. Wenn die Steuereinrichtung 30 anhand der ihr zur Verfügung stehenden Daten feststellt, dass die maximale Gesamtkühl- und/oder Heizenergieerzeugungskapazität der Einzelkühl- und/oder -heizsysteme 20, 22, 24, 26 nicht ausreicht, um alle Luftfahrzeugeinrichtungen 12, 14, 16, 18 mit ausreichend Kühl- und/oder Heizenergie zu versorgen, kann die Steuereinrichtung 30 den Auslastungszustand und damit den Kühl- und/oder Heizenergiebedarf einzelner, vorzugsweise als weniger relevant eingestufte Luftfahrzeugeinrichtungen verringern. Zu diesem Zweck kann die Steuereinrichtung 30 direkt steuernden Einfluss auf den Betrieb der Luftfahrzeugeinrichtungen 12, 14, 16, 18 nehmen. Alternativ dazu ist es jedoch auch denkbar, dass die Steuereinrichtung 30 den einzelnen Luftfahrzeugeinrichtungen 12, 14, 16, 18 zugeordneten Steuereinrichtungen entsprechende Steuersignale zuführt.

Die Steuereinrichtung 30 kann dazu eingerichtet sein, den Betrieb der Einzelkühl- und/oder -heizsysteme 20, 22, 24, 26 und/oder den Betrieb der zu kühlenden und/oder zu beheizenden Luftfahrzeugeinrichtungen 12, 14, 16, 18 digital zu steuern, d.h. Einzelkühl- und/oder -heizsysteme 20, 22, 24, 26 und/oder zu kühlende und/oder zu beheizende Luftfahrzeugeinrichtungen 12, 14, 16, 18, je nach Bedarf, an- oder auszuschalten. Alternativ oder zusätzlich dazu kann die Steuereinrichtung 30 jedoch auch dazu eingerichtet sein, den Betrieb der Einzelkühl- und/oder - heizsysteme 20, 22, 24, 26 und/oder den Betrieb der zu kühlenden und/oder zu beheizenden Luftfahrzeugeinrichtungen 12, 14, 16, 18 derart zu steuern, dass eine stufenweise oder stufenlose Anpassung der Leistung der Einzelkühl- und/oder - heizsysteme 20, 22, 24, 26 und/oder der zu kühlenden und/oder zu beheizenden Luftfahrzeugeinrichtungen 12, 14, 16, 18 erfolgt.

## Patentansprüche

1. System (10) zur Kühlung und/oder Beheizung von zu kühlenden und/oder zu beheizenden Luftfahrzeugeinrichtungen (12, 14, 16, 18), welches umfasst:
- ein erstes Einzelkühl- und/oder -heizsystem (20, 22), das einer ersten zu kühlenden und/oder zu beheizenden Luftfahrzeugeinrichtung (12, 14) zugeordnet ist,
- ein zweites Einzelkühl- und/oder -heizsystem (24, 26), das einer zweiten zu kühlenden und/oder zu beheizenden Luftfahrzeugeinrichtung (16, 18) zugeordnet ist,
- eine Kühl- und/oder Heizenergiezufuhreinrichtung (28), die dazu eingerichtet ist, von dem ersten und/oder dem zweiten Einzelkühl- und/oder -heizsystem (20, 22, 24, 26) erzeugte Kühl- und/oder Heizenergie der ersten und/oder der zweiten zu kühlenden und/oder zu beheizenden Luftfahrzeugeinrichtung (12, 14, 16, 18) zuzuführen, und
- eine Steuereinrichtung (30), die dazu eingerichtet ist, Signale zu empfangen und zu verarbeiten, die für den Kühl- und/oder Heizbedarf der ersten und/oder der zweiten zu kühlenden und/oder zu beheizenden Luftfahrzeugeinrichtung (12, 14, 16, 18) sowie den Auslastungszustand des ersten und/oder des zweiten Einzelkühl- und/oder
- heizsystems (20, 22, 24, 26) charakteristisch sind, und die ferner dazu eingerichtet ist, auf der Grundlage dieser Signale sowie unter Berücksichtigung auslastungsabhängiger Energiebedarfsdaten des ersten und des zweiten Einzelkühl- und/oder - heizsystems (20, 22, 24, 26) den Betrieb des ersten und/oder des zweiten Einzelkühl- und/oder -heizsystems (20, 22, 24, 26) und/oder die Zufuhr von Kühl- und/oder Heizenergie, die von dem ersten und/oder dem zweiten Einzelkühl- und/oder -heizsystem (20, 22, 24, 26) erzeugt wird, zu der ersten und/oder der zweiten zu kühlenden und/oder zu beheizenden Luftfahrzeugeinrichtung (12, 14, 16, 18) derart zu steuern, dass der zur Erzeugung der Kühl- und/oder Heizenergie durch das erste und/oder das zweite Einzelkühl- und/oder -heizsystem (20, 22, 24, 26) erforderliche Gesamtenergiebedarf des ersten und des zweiten Einzelkühl- und/oder
- heizsystems (20, 22, 24, 26) minimiert wird.

2. System nach Anspruch 1,
**dadurch gekennzeichnet, dass** die Steuereinrichtung (30) dazu eingerichtet ist, auf in einer Datenbank gespeicherte auslastungsabhängige Energiebedarfsdaten des ersten und des zweiten Einzelkühl- und/oder -heizsystems (20, 22, 24, 26) zuzugreifen und/oder auslastungsabhängige Energiebedarfsdaten des ersten und des zweiten Einzelkühl- und/oder -heizsystems (20, 22, 24, 26) anhand entsprechender Gleichungen zu berechnen.

3. System nach Anspruch 1 oder 2,
**dadurch gekennzeichnet, dass** die Steuereinrichtung (30) dazu eingerichtet ist, bei der Steuerung des Betriebs des ersten und/oder des zweiten Einzelkühl- und/oder - heizsystems (20, 22, 24, 26) und/oder der Zufuhr von Kühl- und/oder Heizenergie, die von dem ersten und/oder dem zweiten Einzelkühl- und/oder -heizsystem (20, 22, 24, 26) erzeugt wird, zu der ersten und/oder der zweiten zu kühlenden und/oder zu beheizenden Luftfahrzeugeinrichtung (12, 14, 16, 18) der Versorgung der ersten oder der zweiten zu kühlenden und/oder zu beheizenden Luftfahrzeugeinrichtung (12, 14, 16, 18) mit Kühl- und/oder Heizenergie gegenüber der Versorgung der zweiten oder der ersten zu kühlenden und/oder zu beheizenden Luftfahrzeugeinrichtung (16, 18, 12, 14) mit Kühl- und/oder Heizenergie eine höhere Priorität einzuräumen, wenn der Gesamtkühl- und/oder Heizbedarf der ersten und der zweiten zu kühlenden und/oder zu beheizenden Luftfahrzeugeinrichtung (12, 14, 16, 18) die maximale Gesamtkühl- und/oder Heizenergieerzeugungskapazität des ersten und des zweiten Einzelkühl- und/oder -heizsystems (20, 22, 24, 26) übersteigt.

4. System nach Anspruch 3,
**dadurch gekennzeichnet, dass** die Steuereinrichtung (30) dazu eingerichtet ist, bei der Priorisierung der ersten oder der zweiten zu kühlenden und/oder zu beheizenden Luftfahrzeugeinrichtung (12, 14, 16, 18) gegenüber der zweiten oder der ersten zu kühlenden und/oder zu beheizenden Luftfahrzeugeinrichtung (16, 18, 12, 14) bei der Versorgung mit Kühl- und/oder Heizenergie Daten zu berücksichtigen, die für die Relevanz der ersten und/oder der zweiten zu kühlenden und/oder zu beheizenden Luftfahrzeugeinrichtung (12, 14, 16, 18) für den Betrieb des Luftfahrzeugs charakteristisch sind.

5. System nach Anspruch 4,
**dadurch gekennzeichnet, dass** die für die Relevanz der ersten und/oder der zweiten zu kühlenden und/oder zu beheizenden Luftfahrzeugeinrichtung (12, 14, 16, 18) für den Betrieb des Luftfahrzeugs charakteristischen Daten vom Betriebszustand des Luftfahrzeugs abhängige Daten sind und dass die Steuereinrichtung (30) dazu eingerichtet ist, Signale zu empfangen und zu verarbeiten, die für den Betriebszustand des Luftfahrzeugs charakteristisch sind, und die Priorisierung der ersten oder der zweiten zu kühlenden und/oder zu beheizenden Luftfahrzeugeinrichtung (12, 14, 16, 18) gegenüber der zweiten oder der ersten zu kühlenden und/oder zu beheizenden Luftfahrzeugeinrichtung (16, 18, 12, 14) bei der Versorgung mit Kühl- und/oder Heizenergie in Abhängigkeit der für den Betriebszustand des Luftfahrzeugs charakteristischen Signale durchzuführen.

6. Verfahren zur Kühlung und/oder Beheizung von zu kühlenden und/oder zu beheizenden Luftfahrzeugeinrichtungen (12, 14, 16, 18), mit den Schritten:
- Bereitstellen eines ersten Einzelkühl- und/oder -heizsystems (20, 22), das einer ersten zu kühlenden und/oder zu beheizenden Luftfahrzeugeinrichtung (12, 14) zugeordnet ist, und
- Bereitstellen eines zweiten Einzelkühl- und/oder -heizsystems (24, 26), das einer zweiten zu kühlenden und/oder zu beheizenden Luftfahrzeugeinrichtung (16, 18) zugeordnet ist,
**dadurch gekennzeichnet, dass** das Verfahren ferner die Schritte umfasst:
- Bereitstellen einer Kühl- und/oder Heizenergiezufuhreinrichtung (28), die dazu eingerichtet ist, von dem ersten und/oder dem zweiten Einzelkühl- und/oder - heizsystem (20, 22, 24, 26) erzeugte Kühl- und/oder Heizenergie der ersten und/oder der zweiten zu kühlenden und/oder zu beheizenden Luftfahrzeugeinrichtung (12, 14, 16, 18) zuzuführen,
- Zuführen von Signalen zu einer Steuereinrichtung (30), die für den Kühl- und/oder Heizbedarf der ersten und/oder der zweiten zu kühlenden und/oder zu beheizenden Luftfahrzeugeinrichtung (12, 14, 16, 18) sowie den Auslastungszustand des ersten und/oder des zweiten Einzelkühl- und/oder -heizsystems (20, 22, 24, 26) charakteristisch sind,
- Steuern des Betriebs des ersten und/oder des zweiten Einzelkühl- und/oder - heizsystems (20, 22, 24, 26) und/oder der Zufuhr von Kühl- und/oder Heizenergie, die von dem ersten und/oder dem zweiten Einzelkühl- und/oder -heizsystem (20, 22, 24, 26) erzeugt wird, zu der ersten und/oder der zweiten zu kühlenden und/oder zu beheizenden Luftfahrzeugeinrichtung (12, 14, 16, 18) mittels der Steuereinrichtung (30) auf der Grundlage dieser Signale sowie unter Berücksichtigung auslastungsabhängiger Energiebedarfsdaten des ersten und des zweiten Einzelkühl- und/oder - heizsystems (20, 22, 24, 26), wobei der zur Erzeugung der Kühl- und/oder Heizenergie durch das erste und/oder das zweite Einzelkühl- und/oder -heizsystem (20, 22, 24, 26) erforderliche Gesamtenergiebedarf des ersten und des zweiten Einzelkühl- und/oder -heizsystems (20, 22, 24, 26) minimiert wird.

7. Verfahren nach Anspruch 6,
**dadurch gekennzeichnet, dass** die Steuereinrichtung (30) auf in einer Datenbank gespeicherte auslastungsabhängige Energiebedarfsdaten des ersten und des zweiten Einzelkühl- und/oder -heizsystems (20, 22, 24, 26) zugreift und/oder auslastungsabhängige Energiebedarfsdaten des ersten und des zweiten Einzelkühl- und/oder - heizsystems (20, 22, 24, 26) anhand entsprechender Gleichungen berechnet.

8. Verfahren nach Anspruch 6 oder 7,
**dadurch gekennzeichnet, dass** bei der Steuerung des Betriebs des ersten und/oder des zweiten Einzelkühl- und/oder -heizsystems (20, 22, 24, 26) und/oder der Zufuhr von Kühl- und/oder Heizenergie, die von dem ersten und/oder dem zweiten Einzelkühl- und/oder -heizsystem (20, 22, 24, 26) erzeugt wird, zu der ersten und/oder der zweiten zu kühlenden und/oder zu beheizenden Luftfahrzeugeinrichtung (12, 14, 16, 18) der Versorgung der ersten oder der zweiten zu kühlenden und/oder zu beheizenden Luftfahrzeugeinrichtung (12, 14, 16, 18) mit Kühl- und/oder Heizenergie gegenüber der Versorgung der zweiten oder der ersten zu kühlenden und/oder zu beheizenden Luftfahrzeugeinrichtung (12, 14, 16, 18) mit Kühl- und/oder Heizenergie eine höhere Priorität eingeräumt wird, wenn der Gesamtkühl- und/oder Heizbedarf der ersten und der zweiten zu kühlenden und/oder zu beheizenden Luftfahrzeugeinrichtung (12, 14, 16, 18) die maximale Gesamtkühl- und/oder Heizenergieerzeugungskapazität des ersten und des zweiten Einzelkühl- und/oder -heizsystems (20, 22, 24, 26) übersteigt.

9. Verfahren nach Anspruch 8,
**dadurch gekennzeichnet, dass** die Steuereinrichtung (30) bei der Priorisierung der ersten oder der zweiten zu kühlenden und/oder zu beheizenden Luftfahrzeugeinrichtung (12, 14, 16, 18) gegenüber der zweiten oder der ersten zu kühlenden und/oder zu beheizenden Luftfahrzeugeinrichtung (12, 14, 16, 18) bei der Versorgung mit Kühl- und/oder Heizenergie Daten berücksichtigt, die für die Relevanz der ersten und/oder der zweiten zu kühlenden und/oder zu beheizenden Luftfahrzeugeinrichtung (12, 14, 16, 18) für den Betrieb des Luftfahrzeugs charakteristisch sind.

10. Verfahren nach Anspruch 9,
**dadurch gekennzeichnet, dass** die für die Relevanz der ersten und/oder der zweiten zu kühlenden und/oder zu beheizenden Luftfahrzeugeinrichtung (12, 14, 16, 18) für den Betrieb des Luftfahrzeugs charakteristischen Daten vom Betriebszustand des Luftfahrzeugs abhängige Daten sind und dass die Steuereinrichtung (30) Signale empfängt und verarbeitet, die für den Betriebszustand des Luftfahrzeugs charakteristisch sind, und die Priorisierung der ersten oder der zweiten zu kühlenden und/oder zu beheizenden Luftfahrzeugeinrichtung (12, 14, 16, 18) gegenüber der zweiten oder der ersten zu kühlenden und/oder zu beheizenden Luftfahrzeugeinrichtung (12, 14, 16, 18) bei der Versorgung mit Kühl- und/oder Heizenergie in Abhängigkeit der für den Betriebszustand des Luftfahrzeugs charakteristischen Signale durchführt.

## Claims

1. System (10) for cooling and/or heating aircraft devices (12, 14, 16, 18) to be cooled and/or heated, which comprises:
- a first individual cooling and/or heating system (20, 22), which is associated with a first aircraft device (12, 14) to be cooled and/or heated,
- a second individual cooling and/or heating system (24, 26), which is associated with a second aircraft device (16, 18) to be cooled and/or heated,
- a cooling and/or heating energy supply apparatus (28) which is adapted to supply cooling and/or heating energy generated by the first and/or the second individual cooling and/or heating system (20, 22, 24, 26) to the first and/or the second aircraft device (12, 14, 16, 18) to be cooled and/or heated, and
- a control device (30) which is adapted to receive and process signals characteristic of the cooling and/or heating requirements of the first and/or the second aircraft device (12, 14, 16, 18) to be cooled and/or heated and of the load condition of the first and/or the second individual cooling and/or heating system (20, 22, 24, 26), and which is further adapted to control, on the basis of said signals and taking account of load-dependent energy requirement data of the first and second individual cooling and/or heating system (20, 22, 24, 26), the operation of the first and/or the second individual cooling and/or heating system (20, 22, 24, 26) and/or the supply of cooling and/or heating energy generated by the first and/or the second individual cooling and/or heating system (20, 22, 24, 26) to the first and/or the second aircraft device (12, 14, 16, 18) to be cooled and/or heated, in such a way that the total energy requirement of the first and second individual cooling and/or heating system (20, 22, 24, 26) necessary for generation of the cooling and/or heating energy by the first and/or second individual cooling and/or heating system (20, 22, 24, 26) is minimised.

2. System according to Claim 1,
**characterised in that** the control device (30) is adapted to access load-dependent energy requirement data of the first and the second individual cooling and/or heating system (20, 22, 24, 26) stored in a database and/or to calculate load-dependent energy requirement data of the first and the second individual cooling and/or heating system (20, 22, 24, 26) using appropriate equations.

3. System according to Claim 1 or 2,
**characterised in that** the control device (30) is adapted, when controlling the operation of the first and/or the second individual cooling and/or heating system (20, 22, 24, 26) and/or the supply of cooling and/or heating energy generated by the first and/or the second individual cooling and/or heating system (20, 22, 24, 26) to the first and/or the second aircraft device (12, 14, 16, 18) to be cooled and/or heated, to give a higher priority to the supply of cooling and/or heating energy to the first or the second aircraft device (12, 14, 16, 18) to be cooled and/or heated over the supply of cooling and/or heating energy to the second or the first aircraft device (16, 18, 12, 14) to be cooled and/or heated if the overall cooling and/or heating requirements of the first and the second aircraft device (12, 14, 16, 18) to be cooled and/or heated exceed the maximum overall cooling and/or heating energy generating capacity of the first and the second individual cooling and/or heating system (20, 22, 24, 26).

4. System according to Claim 3,
**characterised in that** the control device (30) is adapted, when prioritising the first or the second aircraft device (12, 14, 16, 18) to be cooled and/or heated over the second or the first aircraft device (16, 18, 12, 14) to be cooled and/or heated with regard to the supply of cooling and/or heating energy, to take account of data characteristic of the relevance of the first and/or the second aircraft device (12, 14, 16, 18) to be cooled and/or heated to the operation of the aircraft.

5. System according to Claim 4,
**characterised in that** the data characteristic of the relevance of the first and/or the second aircraft device (12, 14, 16, 18) to be cooled and/or heated to the operation of the aircraft are data dependent on the operating state of the aircraft and **in that** the control device (30) is adapted to receive and process signals characteristic of the operating state of the aircraft, and to carry out the prioritising of the first or the second aircraft device (12, 14, 16, 18) to be cooled and/or heated over the second or the first aircraft device (16, 18, 12, 14) to be cooled and/or heated with regard to the supply of cooling and/or heating energy in dependence on the signals characteristic of the operating state of the aircraft.

6. Method for cooling and/or heating aircraft devices (12, 14, 16, 18) to be cooled and/or heated, having the steps:
- providing a first individual cooling and/or heating system (20, 22), which is associated with a first aircraft device (12, 14) to be cooled and/or heated, and
- providing a second individual cooling and/or heating system (24, 26), which is associated with a second aircraft device (16, 18) to be cooled and/or heated,
**characterised in that** the method further comprises the steps:
- providing a cooling and/or heating energy supply apparatus (28), which is adapted to supply cooling and/or heating energy generated by the first and/or the second individual cooling and/or heating system (20, 22, 24, 26) to the first and/or the second aircraft device (12, 14, 16, 18) to be cooled and/or heated,
- supplying signals which are characteristic of the cooling and/or heating requirements of the first and/or the second aircraft device (12, 14, 16, 18) to be cooled and/or heated and of the load condition of the first and/or the second individual cooling and/or heating system (20, 22, 24, 26) to a control device (30),
- controlling the operation of the first and/or the second individual cooling and/or heating system (20, 22, 24, 26) and/or the supply of cooling and/or heating energy generated by the first and/or the second individual cooling and/or heating system (20, 22, 24, 26) to the first and/or the second aircraft device (12, 14, 16, 18) to be cooled and/or heated by means of the control device (30) on the basis of said signals and taking account of load-dependent energy requirement data of the first and second individual cooling and/or heating system (20, 22, 24, 26), wherein the total energy requirement of the first and second individual cooling and/or heating system (20, 22, 24, 26) necessary for generation of the cooling and/or heating energy by the first and/or second individual cooling and/or heating system (20, 22, 24, 26) is minimised.

7. Method according to Claim 6,
**characterised in that** the control device (30) accesses load-dependent energy requirement data of the first and the second individual cooling and/or heating system (20, 22, 24, 26) stored in a database and/or calculates load-dependent energy requirement data of the first and the second individual cooling and/or heating system (20, 22, 24, 26) using appropriate equations.

8. Method according to Claim 6 or 7,
**characterised in that**, when controlling the operation of the first and/or the second individual cooling and/or heating system (20, 22, 24, 26) and/or the supply of cooling and/or heating energy generated by the first and/or the second individual cooling and/or heating system (20, 22, 24, 26) to the first and/or the second aircraft device (12, 14, 16, 18) to be cooled and/or heated, a higher priority is given to the supply of cooling and/or heating energy to the first or the second aircraft device (12, 14, 16, 18) to be cooled and/or heated over the supply of cooling and/or heating energy to the second or the first aircraft device (12, 14, 16, 18) to be cooled and/or heated if the overall cooling and/or heating requirements of the first and the second aircraft device (12, 14, 16, 18) to be cooled and/or heated exceed the maximum overall cooling and/or heating energy generating capacity of the first and the second individual cooling and/or heating system (20, 22, 24, 26).

9. Method according to Claim 8,
**characterised in that** the control device (30), when prioritising the first or the second aircraft device (12, 14, 16, 18) to be cooled and/or heated over the second or the first aircraft device (12, 14, 16, 18) to be cooled and/or heated with regard to the supply of cooling and/or heating energy, takes account of data characteristic of the relevance of the first and/or the second aircraft device (12, 14, 16, 18) to be cooled and/or heated to the operation of the aircraft.

10. Method according to Claim 9,
**characterised in that** the data characteristic of the relevance of the first and/or the second aircraft device (12, 14, 16, 18) to be cooled and/or heated to the operation of the aircraft are data dependent on the operating state of the aircraft and **in that** the control device (30) receives and processes signals characteristic of the operating state of the aircraft, and carries out the prioritising of the first or the second aircraft device (12, 14, 16, 18) to be cooled and/or heated over the second or the first aircraft device (12, 14, 16, 18) to be cooled and/or heated with regard to the supply of cooling and/or heating energy in dependence on the signals characteristic of the operating state of the aircraft.

## Revendications

1. Système (10) de refroidissement et/ou de chauffage d'équipements d'aéronef (12, 14, 16, 18) à refroidir et/ou à chauffer comprenant :
- un premier système individuel de refroidissement et/ou de chauffage (20, 22) qui est associé à un premier équipement d'aéronef (12, 14) à refroidir et/ou à chauffer,
- un deuxième système individuel de refroidissement et/ou de chauffage (24, 26) qui est associé à un deuxième équipement d'aéronef (16, 18) à refroidir et/ou à chauffer,
- un équipement d'alimentation en énergie de refroidissement et/ou de chauffage (28) qui est conçu pour fournir de l'énergie de refroidissement et/ou de chauffage produite par le premier et/ou le deuxième système individuel de refroidissement et/ou de chauffage (20, 22, 24, 26) au premier et/ou au deuxième équipement d'aéronef (12, 14, 16, 18) à refroidir et/ou à chauffer, et
- un équipement de commande (30) qui est conçu pour recevoir et traiter des signaux qui sont caractéristiques du besoin en refroidissement et/ou en chauffage du premier et/ou du deuxième équipement d'aéronef (12, 14, 16, 18) à refroidir et/ou à chauffer ainsi que de l'état de charge du premier et/ou du deuxième système individuel de refroidissement et/ou de chauffage (20, 22, 24, 26), et qui est en outre conçu pour commander, sur la base de ces signaux et en tenant compte de données de besoin en énergie en fonction de la charge du premier et du deuxième système individuel de refroidissement et/ou de chauffage (20, 22, 24, 26), le fonctionnement du premier et/ou du deuxième système individuel de refroidissement et/ou de chauffage (20, 22, 24, 26) et/ou la fourniture d'énergie de refroidissement et/ou de chauffage produite par le premier et/ou le deuxième système individuel de refroidissement et/ou de chauffage (20, 22, 24, 26) au premier et/ou au deuxième équipement d'aéronef (12, 14, 16, 18) à refroidir et/ou à chauffer de telle sorte que le besoin en énergie total du premier et du deuxième système individuel de refroidissement et/ou de chauffage (20, 22, 24, 26) nécessaire pour produire l'énergie de refroidissement et/ou de chauffage par le premier et/ou le deuxième système individuel de refroidissement et/ou de chauffage (20, 22, 24, 26) soit réduit au minimum.

2. Système selon la revendication 1,
**caractérisé en ce que** l'équipement de commande (30) est conçu pour accéder à des données de besoin en énergie en fonction de la charge du premier et du deuxième système individuel de refroidissement et/ou de chauffage (20, 22, 24, 26) stockées dans une base de données et/ou pour calculer des données de besoin en énergie en fonction de la charge du premier et du deuxième système individuel de refroidissement et/ou de chauffage (20, 22, 24, 26) au moyen d'équations correspondantes.

3. Système selon la revendication 1 ou 2,
**caractérisé en ce que** l'équipement de commande (30) est conçu pour, lors de la commande du fonctionnement du premier et/ou du deuxième système individuel de refroidissement et/ou de chauffage (20, 22, 24, 26) et/ou de la fourniture d'énergie de refroidissement et/ou de chauffage produite par le premier et/ou le deuxième système individuel de refroidissement et/ou de chauffage (20, 22, 24, 26) au premier et/ou au deuxième équipement d'aéronef (12, 14, 16, 18) à refroidir et/ou à chauffer, accorder une priorité plus élevée à l'alimentation du premier et/ou du deuxième équipement d'aéronef (12, 14, 16, 18) à refroidir et/ou à chauffer en énergie de refroidissement et/ou de chauffage qu'à l'alimentation du deuxième ou du premier équipement d'aéronef (16, 18, 12, 14) à refroidir et/ou à chauffer en énergie de refroidissement et/ou de chauffage si le besoin total de refroidissement et/ou de chauffage du premier et du deuxième équipement d'aéronef (12, 14, 16, 18) à refroidir et/ou à chauffer dépasse la capacité de production totale maximale d'énergie de refroidissement et/ou de chauffage du premier et du deuxième système individuel de refroidissement et/ou de chauffage (20, 22, 24, 26).

4. Système selon la revendication 3,
**caractérisé en ce que** l'équipement de commande (30) est conçu pour, lors de la priorisation du premier ou du deuxième équipement d'aéronef (12, 14, 16, 18) à refroidir et/ou à chauffer par rapport au deuxième ou au premier équipement d'aéronef (16, 18, 12, 14) à refroidir et/ou à chauffer, prendre en compte, pour l'alimentation en énergie de refroidissement et/ou de chauffage, des données qui sont caractéristiques de la pertinence du premier et/ou du deuxième équipement d'aéronef (12, 14, 16, 18) à refroidir et/ou à chauffer pour le fonctionnement de l'aéronef.

5. Système selon la revendication 4,
**caractérisé en ce que** les données caractéristiques de la pertinence du premier et/ou du deuxième équipement d'aéronef (12, 14, 16, 18) à refroidir et/ou à chauffer pour le fonctionnement de l'aéronef sont des données dépendantes de l'état de fonctionnement de l'aéronef, et **en ce que** l'équipement de commande (30) est conçu pour recevoir et traiter des signaux qui sont caractéristiques de l'état de fonctionnement de l'aéronef, et accorder la priorité au premier ou au deuxième équipement d'aéronef (12, 14, 16, 18) à refroidir et/ou à chauffer sur le deuxième ou le premier équipement d'aéronef (16, 18, 12, 14) à refroidir et/ou à chauffer pour l'alimentation en énergie de refroidissement et/ou de chauffage en fonction des signaux caractéristiques de l'état de fonctionnement de l'aéronef.

6. Procédé de refroidissement et/ou de chauffage d'équipements d'aéronef (12, 14, 16, 18) à refroidir et/ou à chauffer, comprenant les étapes de :
- fourniture d'un premier système individuel de refroidissement et/ou de chauffage (20, 22) qui est associé à un premier équipement d'aéronef (12, 14) à refroidir et/ou à chauffer, et
- fourniture d'un deuxième système individuel de refroidissement et/ou de chauffage (24, 26) qui est associé à un deuxième équipement d'aéronef (16, 18) à refroidir et/ou à chauffer,
**caractérisé en ce que** le procédé comprend en outre les étapes de :
- fourniture d'un dispositif d'alimentation en énergie de refroidissement et/ou de chauffage (28) qui est conçu pour fournir de l'énergie de refroidissement et/ou de chauffage produite par le premier et/ou le deuxième système individuel de refroidissement et/ou de chauffage (20, 22, 24, 26) au premier et/ou au deuxième équipement d'aéronef (12, 14, 16, 18) à refroidir et/ou à chauffer,
- amenée à un équipement de commande (30) de signaux qui sont caractéristiques du besoin en refroidissement et/ou en chauffage du premier et/ou du deuxième équipement d'aéronef (12, 14, 16, 18) à refroidir et/ou à chauffer ainsi que de l'état de charge du premier et/ou du deuxième système individuel de refroidissement et/ou de chauffage (20, 22, 24, 26),
- commande du fonctionnement du premier et/ou du deuxième système individuel de refroidissement et/ou de chauffage (20, 22, 24, 26) et/ou de la fourniture d'énergie de refroidissement et/ou de chauffage produite par le premier et/ou le deuxième système individuel de refroidissement et/ou de chauffage (20, 22, 24, 26) au premier et/ou au deuxième équipement d'aéronef (12, 14, 16, 18) à refroidir et/ou à chauffer au moyen de l'équipement de commande (30) sur la base desdits signaux et en tenant compte de données de besoin en énergie en fonction de la charge du premier et du deuxième système individuel de refroidissement et/ou de chauffage (20, 22, 24, 26), le besoin en énergie total du premier et du deuxième système individuel de refroidissement et/ou de chauffage (20, 22, 24, 26) nécessaire pour produire l'énergie de refroidissement et/ou de chauffage par le premier et/ou le deuxième système individuel de refroidissement et/ou de chauffage (20, 22, 24, 26) étant réduit au minimum.

7. Procédé selon la revendication 6,
**caractérisé en ce que** l'équipement de commande (30) accède à des données de besoin en énergie en fonction de la charge du premier et du deuxième système individuel de refroidissement et/ou de chauffage (20, 22, 24, 26) stockées dans une base de données et/ou calcule des données de besoin en énergie en fonction de la charge du premier et du deuxième système individuel de refroidissement et/ou de chauffage (20, 22, 24, 26) au moyen d'équations correspondantes.

8. Procédé selon la revendication 6 ou 7,
**caractérisé en ce que** lors de la commande du fonctionnement du premier et/ou du deuxième système individuel de refroidissement et/ou de chauffage (20, 22, 24, 26) et/ou de la fourniture d'énergie de refroidissement et/ou de chauffage produite par le premier et/ou le deuxième système individuel de refroidissement et/ou de chauffage (20, 22, 24, 26) au premier et/ou au deuxième équipement d'aéronef (12, 14, 16, 18) à refroidir et/ou à chauffer, une priorité plus élevée est accordée à l'alimentation du premier ou du deuxième équipement d'aéronef (12, 14, 16, 18) à refroidir et/ou à chauffer en énergie de refroidissement et/ou de chauffage qu'à l'alimentation du deuxième ou du premier équipement d'aéronef (12, 14, 16, 18) à refroidir et/ou à chauffer en énergie de refroidissement et/ou de chauffage si le besoin total en refroidissement et/ou en chauffage du premier et du deuxième équipement d'aéronef (12, 14, 16, 18) à refroidir et/ou à chauffer dépasse la capacité de production totale maximale d'énergie de refroidissement et/ou de chauffage du premier et du deuxième système individuel de refroidissement et/ou de chauffage (20, 22, 24, 26).

9. Procédure selon la revendication 8,
**caractérisé en ce que**, lors de la priorisation du premier ou du deuxième équipement d'aéronef (12, 14, 16, 18) à refroidir et/ou à chauffer par rapport au deuxième ou au premier équipement d'aéronef (12, 14, 16, 18) à refroidir et/ou à chauffer, l'équipement de commande (30) prend en compte, pour l'alimentation en énergie de refroidissement et/ou de chauffage, des données qui sont caractéristiques de la pertinence du premier et/ou du deuxième équipement d'aéronef (12, 14, 16, 18) à refroidir et/ou à chauffer pour le fonctionnement de l'aéronef.

10. Procédé selon la revendication 9,
**caractérisé en ce que** les données caractéristiques de la pertinence du premier et/ou du deuxième équipement d'aéronef (12, 14, 16, 18) à refroidir et/ou à chauffer pour le fonctionnement de l'aéronef sont des données dépendantes de l'état de fonctionnement de l'aéronef, et **en ce que** l'équipement de commande (30) reçoit et traite des signaux qui sont caractéristiques de l'état de fonctionnement de l'aéronef, et accorde la priorité au premier ou au deuxième équipement d'aéronef (12, 14, 16, 18) à refroidir et/ou à chauffer sur le deuxième ou le premier équipement d'aéronef (12, 14, 16, 18) à refroidir et/ou à chauffer pour l'alimentation en énergie de refroidissement et/ou de chauffage en fonction des signaux caractéristiques de l'état de fonctionnement de l'aéronef.
